(19) Europäisches Patentamt
European Patent Office
Office européen des brevets

(11) **EP 1 994 505 B1**

(12) **FASCICULE DE BREVET EUROPEEN**

(45) Date de publication et mention de la délivrance du brevet:
**18.01.2017 Bulletin 2017/03**

(21) Numéro de dépôt: **07731119.9**

(22) Date de dépôt: **09.03.2007**

(51) Int Cl.:
***G06T 11/00*** *(2006.01)*

(86) Numéro de dépôt international:
**PCT/FR2007/000422**

(87) Numéro de publication internationale:
**WO 2007/104853 (20.09.2007 Gazette 2007/38)**

(54) **PROCEDE DE RECONSTRUCTION D'UNE IMAGE DE TOMOGRAPHIE OPTIQUE PAR FLUORESCENCE D'UN OBJET A CONTOUR QUELCONQUE**

VERFAHREN ZUR REKONSTRUKTION EINES OPTISCHEN TOMOGRAFIEBILDES EINES OBJEKTS MIT KONTUR MITTELS FLUORESZENZ

METHOD OF RECONSTRUCTING AN OPTICAL TOMOGRAPHY IMAGE BY FLUORESCENCE OF AN OBJECT HAVING ANY OUTLINE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **10.03.2006 FR 0602136**

(43) Date de publication de la demande:
**26.11.2008 Bulletin 2008/48**

(73) Titulaire: **Commissariat à l'Énergie Atomique et aux Énergies Alternatives**
**75015 Paris (FR)**

(72) Inventeurs:
• **HERVE, Lionel**
**69100 Villeurbanne (FR)**
• **DINTEN, Jean-Marc**
**69008 Lyon (FR)**
• **KOENIG, Anne**
**38410 Saint Martin d'Uriage (FR)**

(74) Mandataire: **Hecké, Gérard et al**
**Cabinet Hecké**
**10, rue d'Arménie - Europole**
**BP 1537**
**38025 Grenoble Cedex 1 (FR)**

(56) Documents cités:
**WO-A-2004/072906        US-A- 5 762 607**

• **SCHOTLAND J C: "Tomography with diffusing photons: a feynman path integral perspective" ACOUSTICS, SPEECH, AND SIGNAL PROCESSING, 2000. ICASSP '00. PROCEEDINGS. 2000 IEEE INTERNATIONAL CONFERENCE ON 5-9 JUNE 2000, PISCATAWAY, NJ, USA, IEEE, vol. 6, 5 juin 2000 (2000-06-05), pages 3791-3794, XP010505724 ISBN: 0-7803-6293-4**

**Description**

**Domaine technique de l'invention**

L'invention concerne un procédé de reconstruction d'une image de tomographie optique par fluorescence pour examiner un objet inhomogène comportant des fluorophores et ayant une première face et une seconde face opposée, procédé comportant :

- l'éclairement de la première face de l'objet avec une lumière d'excitation des fluorophores et
- la détection par l'intermédiaire d'une matrice de détecteurs d'une lumière émise par la seconde face de l'objet,

la répartition des fluorophores étant déterminée par l'intermédiaire de fonctions de Green pertinentes associées chacune à une première et à une seconde coordonnée spatiale.

**État de la technique**

La tomographie optique de fluorescence consiste à déterminer la répartition tridimensionnelle de fluorophores dans un objet comportant un milieu diffusant. Les fluorophores peuvent être fonctionnalisés pour cibler des cellules tumorales et, ainsi, marquer des cellules cancéreuses. Une face avant de l'objet est éclairée par une lumière d'excitation dont le spectre correspond au fluorophore. Généralement une lumière d'excitation est déplacée point par point sur la surface de l'objet et une caméra prélève l'image de la lumière de fluorescence qui est émise par la face arrière de l'objet, dans le cas d'une géométrie de transmission où l'objet présente, par exemple, la forme d'une tranche ou d'une plaque (géométrie de type « slab » en anglais). Ainsi, la face avant et la face arrière opposée constituent deux plans parallèles. Cette géométrie est fréquemment utilisée en mammographie et imagerie du petit animal.

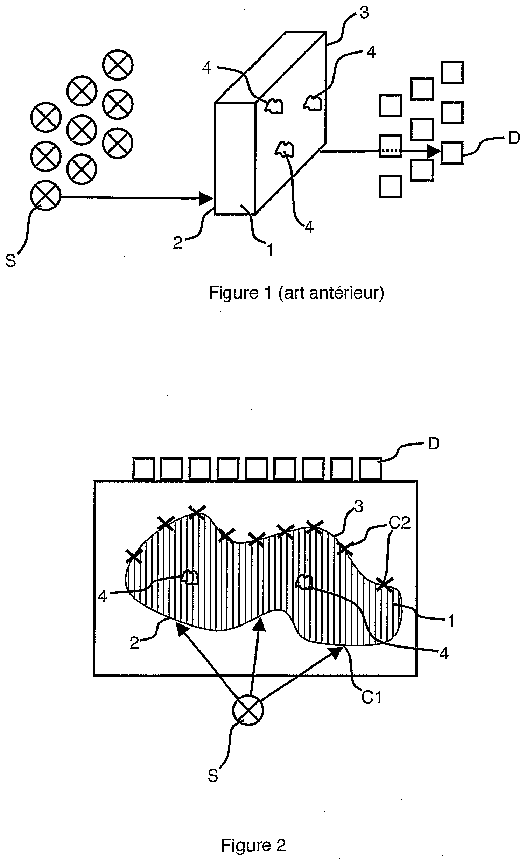

Comme représenté sur la figure 1, l'objet 1 est éclairé par un jeu de sources lumineuses S d'une longueur d'onde d'excitation $\lambda$ex placées vis-à-vis d'une première face 2 de l'objet 1. La lumière transmise à la longueur d'onde d'excitation $\lambda$ex et la lumière émise par les fluorophores 4 avec une longueur d'onde d'émission $\lambda$em sont détectées par un jeu de détecteurs D disposé vis-à-vis d'une seconde face 3 de l'objet 1, opposée à la première face 2. En pratique, le jeu de sources peut être remplacé par un laser dont le faisceau se déplace sur la première face 2 de l'objet 1.

Les longueurs d'onde d'excitation $\lambda$ex et d'émission $\lambda$em sont détectées séparément par l'intermédiaire de filtres optiques. Ainsi, on distingue les signaux Uex(s,d) détectés à la longueur d'onde d'excitation $\lambda$ex et les signaux Uem(s,d) détectés à la longueur d'onde d'émission $\lambda$em, s et d étant les indices identifiant respectivement la source S et le détecteur D correspondant au signal U(s,d), c'est-à-dire la source S et le détecteur D activés pour l'acquisition du signal U(s,d).

Le traitement des signaux Uex(s,d) et Uem(s,d) permet de reconstruire la répartition des fluorophores 4 dans l'objet 1. Les algorithmes pour résoudre ce problème sont bien connus et décrits, par exemple, dans l'article « Optical tomography in medical imaging » de S.R.Arridge (Inverse Problems 15, R41-R93, 1999). Le problème est notamment résolu à partir de l'équation de diffusion, établie à partir de l'équation de transfert radiatif. Chaque source S génère dans le milieu une onde diffusive ayant la longueur d'onde $\lambda$ex. L'onde diffusive se propage dans le milieu et une partie de l'énergie de l'onde diffusive excite les fluorophores 4 qui peuvent être considérés comme des sources secondaires réémettant un rayonnement à la longueur d'onde d'émission $\lambda$em.

L'équation de diffusion est résolue par l'intermédiaire de fonctions de Green dans une géométrie de plans parallèles, ce qui permet d'obtenir une expression analytique pour la propagation de l'onde diffusive dans le milieu.

En ce qui concerne le signal de fluorescence, on considère que chaque fluorophore 4 présente un paramètre de conversion de photons correspondant à la fraction de l'énergie incidente qui est réémise avec la longueur d'onde d'émission $\lambda$em. De manière plus générale, on peut associer à chaque élément de volume M (voxel) de l'objet 1 un paramètre de conversion X(m), où m est l'indice de maillage identifiant les voxels M qui sont définis selon un maillage quelconque du volume de l'objet 1. On note G(m,d) la fonction de Green correspondant à la propagation de lumière entre un voxel M et un détecteur D. De plus, on note G(s,m) la fonction de Green correspondant à la propagation de lumière entre une source S et un voxel M. Le flux incident dans le voxel M et correspondant à la source S est proportionnel à Q(s)G(s,m), où Q(s) est le flux émis par la source S. Le flux réémis par le voxel M avec la longueur d'onde d'émission $\lambda$em est donné par Q(s)G(s,m)X(m). La contribution du voxel M excité par la source S, au signal détecté par le détecteur D est donc proportionnelle à Q(s)G(s,m)X(m)G(m,d). En considérant l'ensemble du volume de l'objet, le signal Uem(s,d) est proportionnel à la somme des contributions de tous les voxels M, c'est-à-dire à l'expression Q(s)$\Sigma$m(G(s,m)X(m)G(m,d)). Lorsque les flux Q(s) émis par les sources S sont constants et égaux pour toutes les différentes sources, on peut incorporer les différentes constantes dans les paramètres de conversion X(m) et on obtient :

$$U^{em}_{s,d} = \sum_m G_{s,m} X_m G_{m,d} \quad (1).$$

On obtient ainsi un système linéaire d'équations reliant les mesures des détecteurs aux paramètres de conversion X(m) inconnus et recherchés.

L'acquisition d'un nombre suffisant de mesures permet ainsi de reconstruire la répartition des fluorophores 4 dans l'objet 1. La reconstruction proprement dite est, par exemple, effectuée au moyen d'un algorithme itératif de type ART (Algebraic Reconstruction Technique) qui minimise l'erreur entre les mesures expérimentales et le résultat analytique calculé.

L'algoritme ART minimise l'erreur

$$\left\| \frac{U^{em}_{s,d}}{U^{ex}_{s,d}} - \frac{\sum_m G_{s,m} X_m G_{m,d}}{U^{ex}_{s,d}} \right\|^2 = \left\| Y_{mes} - W X_m \right\|^2 \ (2),$$

avec $W = G(s,m)G(m,d)/U_{ex}(s,d)$.

La lumière d'excitation de la fluorescence et la lumière de fluorescence sont habituellement situées dans la bande spectrale du proche infrarouge, puisque le pouvoir de pénétration de cette lumière est relativement important dans des tissus biologiques. Le coefficient d'extinction étant par exemple de $2,5 cm^{-1}$, l'intensité de lumière est réduite par un facteur 12 pour chaque centimètre pénétré, ce qui exclut l'étude dans une profondeur supérieure à 10 cm.

De manière générale, on tient compte des positions des détecteurs dans l'espace. Typiquement, les sources et les détecteurs sont considérés en contact avec l'objet. Lorsqu'on utilise un laser, par exemple, le point d'impact du laser sur l'objet peut être retenu comme position de la source de lumière. Les détecteurs peuvent être en contact avec l'objet comme dans le cas d'une fibre optique qui vient en contact avec l'objet.

Lorsqu'on utilise une source modulée à une fréquence donnée, on peut mesurer le déphasage de l'onde. Enfin, lorsqu'on utilise une source impulsionnelle et une détection résolue en temps, on peut aussi mesurer la réponse impulsionnelle du système. Dans tous les cas, les signaux correspondants peuvent être décrits par l'intermédiaire des signaux U(s,d) du modèle introduit ci-dessus.

Les procédés connus de reconstruction d'image correspondent à des cas particuliers simples où les fonctions de Green peuvent être exprimées de façon analytique. Par exemple, on considère un objet infini, une géométrie cylindrique, une géométrie parallélépipédique ou une géométrie de plans parallèles comme ci-dessus. Cependant, le cas d'un objet inhomogène de forme inconnue est difficile à traiter.

Une technique connue consiste à disposer l'objet dans un récipient de forme simple, rempli d'un liquide d'indice présentant des propriétés optiques de diffusion et d'absorption proches de celles de l'objet. Ceci permet de traiter l'objet comme un objet de forme simple. Cependant, l'utilisation du liquide d'indice nécessite des étapes supplémentaires, que l'on cherche à éviter.

Pour une géométrie quelconque, la détermination des fonctions de Green peut se faire par solution de l'équation de diffusion par une méthode numérique, par exemple par la méthode des éléments finis, comme décrit dans l'article « Adaptive finite element based tomography for fluorescence optical imaging in tissue » de A. Joshi et al. (Optics Express 5402, Vol.12, No.22, 1 November 2004). La méthode des éléments de frontière finis est décrite dans l'article « Expérimental Fluorescence Tomography of Tissues With Noncontact Measurements » de R.B. Schulz et al. (IEEE Transactions on Medical Imaging, Vol.23, No.4, April 2004). Ces méthodes exigent un grand nombre de calculs et sont ainsi plus lentes que les méthodes analytiques. De plus, la forme de l'objet doit être déterminée au préalable, par exemple par l'intermédiaire d'un système de triangulation laser.

Les milieux biologiques étant inhomogènes, les fonctions de Green doivent être adaptées. Pour une géométrie simple, par exemple, les fonctions de Green et les paramètres optiques du système sont déterminés de façon itérative à partir de la différence entre le signal mesuré correspondant au milieu inhomogène et le signal théorique correspondant à un milieu homogène. Dans ce cas, on définit également G(m,m'), la fonction de Green correspondant à la propagation de lumière entre un voxel M et un voxel M' du maillage. De plus, on note G(s,d), la fonction de Green correspondant à la propagation de lumière entre une source S et un détecteur D. Cependant, le calcul de la matrice G(m,m') nécessite un temps de calcul très long. Une autre technique, similaire, est décrite dans l'article « Optical Tomography Imaging Based on Higher Order Born Approximation of Diffuse Photon Density Waves » de E. Scherleitner et al. (IEEE Transactions on Instrumentation and Measurement, Vol.54, No.4, August 2005).

L'article « Free-Space Propagation of Diffusive Light : Theory and Experiments » de J. Ripoll et al. (Physical Review Letters, Vol.91, No.10, 2003) décrit une technique pour déterminer la distribution de l'intensité de la lumière émise par un objet homogène d'une forme quelconque, considérant la propagation diffusive de la lumière dans l'espace libre. Ceci permet d'utiliser des mesures lorsque les détecteurs ne sont pas en contact avec l'objet, comme par exemple dans le cas d'une caméra CCD qui ne peut pas être en parfait contact avec un objet biologique de forme quelconque. On peut ainsi déterminer, à partir de la connaissance de la forme de la surface de l'objet, l'intensité de lumière à la surface de l'objet.

## Objet de l'invention

L'invention a pour but de remédier à ces inconvénients et, en particulier, de simplifier le procédé de reconstruction de la répartition de fluorophores dans le cas d'un milieu inhomogène ayant une forme quelconque, notamment sans nécessiter l'utilisation d'un liquide d'indice et sans nécessiter des méthodes numériques complexes.

Selon l'invention, ce but est atteint par le fait que la seconde coordonnée spatiale de chacune des fonctions de Green pertinentes correspond à un point de la seconde face de l'objet et/ou par le fait que la première coordonnée spatiale de chacune des fonctions de Green pertinentes correspond à un point de la première face de l'objet.

Selon un mode de réalisation particulier de l'invention, le procédé comporte la mise en contact de l'objet avec une première partie des détecteurs, et la mise à zéro de signaux détectes par une seconde partie complémentaire des détecteurs.

De manière correspondante, le procédé peut comporter la mise en contact de l'objet avec une première partie de sources, et la mise à zéro de signaux émis par une seconde partie complémentaire de sources.

Selon un autre mode de réalisation particulier, des intensités de lumière émises à la seconde face de l'objet sont déterminées par calcul, après détermination expérimentale de la forme de la surface de l'objet, au moins partiellement, les fonctions de Green pertinentes correspondant aux intensités de lumière émises à la seconde face de l'objet.

De manière correspondante, des intensités de lumière reçues par la première face de l'objet sont déterminées par calcul, après détermination expérimentale, au moins partielle, de la forme de la surface de l'objet, les fonctions de Green pertinentes correspondant aux intensités de lumière reçues par la première face de l'objet.

## Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :

La figure 1 illustre un procédé de reconstruction selon l'art antérieur.
Les figures 2 et 3 illustrent deux variantes du procédé selon l'invention.
La figure 4 illustre un mode de réalisation particulier de certaines étapes du procédé selon l'invention.
La figure 5 illustre un mode de réalisation particulier d'autres étapes du procédé selon l'invention.

## Description de modes particuliers de réalisation

L'objet 1 inhomogène représenté sur la figure 2 comporte des fluorophores 4. Une première face 2 de l'objet 1 est disposée en regard d'une source de lumière S pour l'éclairement de la première face 2 de l'objet 1 avec une lumière d'excitation $\lambda$ex des fluorophores 4. Une matrice de détecteurs D, par exemple une caméra de type CCD, permet de détecter la lumière ($\lambda$em, $\lambda$ex) émise par la seconde face 3 de l'objet 1. La répartition des fluorophores 4 est déterminée par l'intermédiaire de fonctions de Green G pertinentes associées chacune à une première coordonnée spatiale C1 et à une seconde coordonnée spatiale C2.

Par les fonctions de Green G pertinentes, on entend :

Soit les fonctions de Green dont la première coordonnée spatiale désigne initialement une source, quelque soit le formalisme utilisé, par exemple les fonctions G(s,m) ou G(s,d) introduites ci-dessus, ou toute fonction de transfert reliant une coordonnée spatiale d'entrée et une coordonnée spatiale de sortie, la coordonnée spatiale d'entrée correspondant à la première coordonnée spatiale.
Soit les fonctions de Green dont la seconde coordonnée spatiale désigne initialement un détecteur, quelque soit le formalisme utilisé, par exemple les fonctions G(s,d) ou G(m,d) introduites ci-dessus, ou toute fonction de transfert reliant une coordonnée spatiale d'entrée et une coordonnée spatiale de sortie, la coordonnée spatiale de sortie correspondant à la seconde coordonnée spatiale.

Ainsi, au moins l'une des coordonnées spatiales (C1 et/ou C2) de chacune des fonctions de Green pertinentes

(G(s,m), G(m,d), G(s,d)) correspond à un point d'une face associée (2 et/ou 3) de l'objet 1, où la première face 2 de l'objet 1 est associée à la première coordonnée spatiale C1 de chacune des fonctions de Green pertinentes (G(s,m), G(s,d)) et/ou où la seconde face 3 de l'objet 1 est associée à la seconde coordonnée spatiale C2 de chacune des fonctions de Green pertinentes (G(m,d), G(s,d)).

Dans le mode de réalisation illustré à la figure 2, les intensités de lumière émises à la seconde face 3 de l'objet 1 sont déterminées par calcul, après détermination expérimentale, au moins partielle, de la forme de la surface de l'objet 1, par exemple par triangulation. Les fonctions de Green G pertinentes correspondent, ainsi, aux intensités de lumière émises à la seconde face 3 de l'objet 1. Le calcul peut notamment être fait conformément à l'article précité « Free-Space Propagation of Diffusive Light : Theory and Experiments » de J. Ripoll et al. (Physical Review Letters, Vol.91, No.10, 2003). Ainsi, la seconde coordonnée spatiale C2 de chacune des fonctions de Green G pertinentes correspond à un point de la seconde face 3 de l'objet 1. On peut utiliser le même principe côté sources en calculant les fonctions de Green correspondant aux intensités de lumière reçues par la première face 2. Ainsi, la première coordonnée spatiale C1 de chacune des fonctions de Green G pertinentes correspond à un point de la première face 2 de l'objet 1.

Ainsi, il est possible de reconstruire la fluorescence d'un objet de forme quelconque ayant une surface de forme connue, sans utiliser des calculs par éléments finis pour modéliser la propagation de la lumière dans l'objet. Dans un mode de réalisation particulier, la première coordonnée spatiale C1 de chacune des fonctions de Green G pertinentes correspond à un point de la première face 2 de l'objet 1.

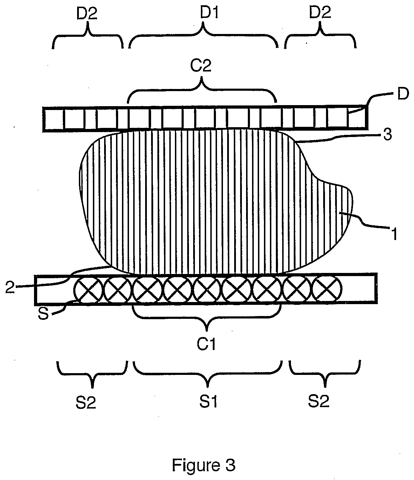

Sur la figure 3, l'objet est comprimé entre les détecteurs D et les sources S. Ainsi, l'objet 1 est mis en contact avec une première partie D1 des détecteurs D. Ainsi, une seconde partie D2 complémentaire des détecteurs n'est donc pas en contact avec l'objet 1. Les signaux détectés par les détecteurs D2 de la seconde partie complémentaire peuvent être mis à zéro. Par conséquent, seuls les signaux détectés par les détecteurs D1 en contact avec l'objet 1 contribuent à la détermination des fonctions de Green G pertinentes non-nulles. Ainsi, la seconde coordonnée spatiale C2 de chacune des fonctions de Green G pertinentes correspond à un point de la seconde face 3 de l'objet 1.

Lorsque l'objet 1 est mis en contact avec une première partie S1 de sources S, on peut mettre à zéro des signaux émis par une seconde partie S2 complémentaire de sources S. Ainsi, seuls les signaux émis par les sources S1 en contact avec l'objet 1 contribuent à la détermination des fonctions de Green G pertinentes non-nulles.

Afin de déterminer les secondes coordonnées spatiales C2, il suffit donc de mesurer l'épaisseur de l'objet 1 après compression et de déterminer les détecteurs D1 et les sources S1 en contact avec l'objet 1. On peut également envisager un dispositif pour détecter les zones en contact entre l'objet et les détecteurs D et/ou sources S.

Le procédé peut également comporter l'élimination d'équations associées à un détecteur D de la seconde partie D2 des détecteurs qui n'est pas en contact avec l'objet 1, notamment quand aucune information sur la forme de la surface de l'objet 1 n'est disponible. Cependant, la mise à zéro des signaux permet d'utiliser plus d'informations sur l'objet 1 que dans le cas de la simple élimination d'équations. Ainsi, avec la mise à zéro comme décrit ci-dessus, on obtient une reconstruction plus juste. Toujours de façon symétrique, on peut éliminer les équations associées aux sources S de la seconde partie S2 des sources.

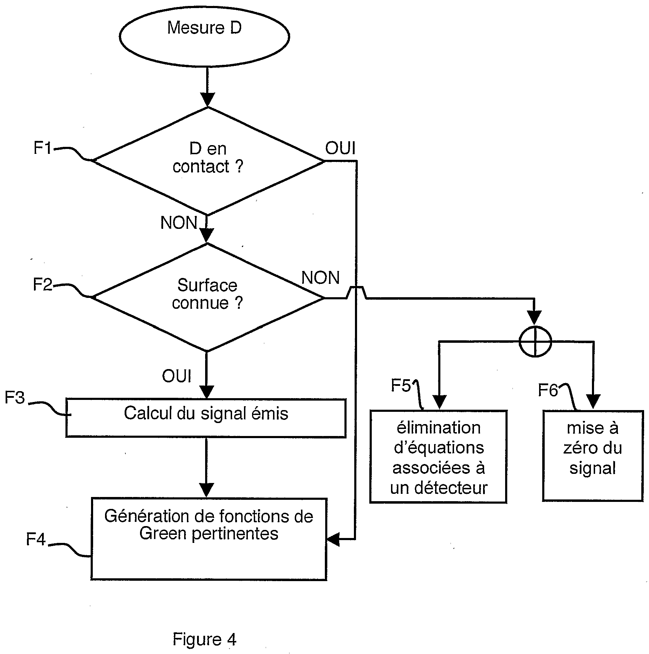

Comme représenté à la figure 4, le signal d'un premier détecteur D en contact avec l'objet 1 (sortie OUI de F1) peut être utilisé pour la génération d'une fonction de Green pertinente (F4), dont la seconde coordonnée spatiale correspond au premier détecteur D.

Le signal d'un second détecteur D non en contact avec l'objet 1 (sortie NON de F1) peut être utilisé pour le calcul (F3) de l'intensité émise par la seconde face 3 de l'objet 1, si la surface de l'objet 1 est connue (sortie OUI de F2). Ce calcul permet également de déterminer des fonctions de Green pertinentes, dont les secondes coordonnées spatiales correspondent à des points de la seconde face 3 de l'objet 1.

Lorsqu'une zone de la surface de l'objet n'est pas connue (sortie NON de F2), on peut mettre à zéro le signal des détecteurs correspondants (F5), c'est-à-dire des détecteurs susceptibles de détecter un rayonnement émis par cette zone de la surface de l'objet 1. Dans une variante, on élimine des équations associées à ces détecteurs D (F6). Ici encore, on peut appliquer le principe aux équations associées aux sources S de la seconde partie S2 des sources.

De façon générale, l'invention s'applique côté détecteurs et/ou côté sources. Ainsi, pour la détermination des fonctions de Green pertinentes correspondant aux sources S, le principe illustré à la figure 4 s'applique de manière analogue et porte sur les signaux des sources S (au lieu de la mesure), le contact entre l'objet 1 et les sources S (voir F1), le calcul du signal reçu (voir F3) et l'élimination d'équations associées à une source S (voir F5).

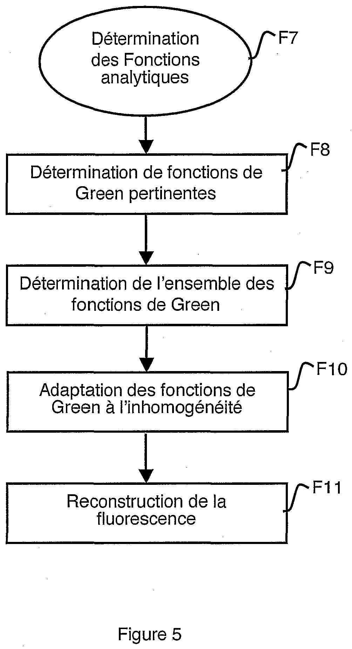

Comme représenté à la figure 5, pour établir les fonctions de Green pertinentes, on peut d'abord déterminer des fonctions de Green analytiques (étape F7) pour une géométrie simple. A partir des fonctions de Green analytiques ainsi obtenues on détermine l'ensemble des fonctions de Green pertinentes G(s,m), G(m,d) et G(s,d) (étape F8), soit par calcul (voir mode de réalisation de la figure 2), soit par sélection des fonctions de Green dont la seconde coordonnée spatiale C2 correspond à un point de la seconde face 3 de l'objet 1 (voir mode de réalisation de la figure 3) et/ou soit par sélection sur la première coordonnée spatiale C1 correspondant à un point de la première face 2 de l'objet 1. L'étape F8 correspond alors aux étapes représentées à la figure 4. On détermine également (étape F9) les autres fonctions de Green G(m,m'), nécessaires au procédé. Ainsi, on dispose d'un ensemble de fonctions de Green G(s,m), G(m,d), G(m,m') et G(s,d).

Ensuite, on applique un formalisme pour prendre en compte des inhomogénéités pour déterminer des fonctions de Green adaptées à l'inhomogénéité de l'objet, comme décrit ci-dessus (étape F10). Cette étape permet également de déterminer la forme de zones de la surface de l'objet, qui n'a pas été déterminée auparavant. Cette étape permet aussi de corriger des variations des paramètres optiques internes de l'objet. Enfin, la cartographie de fluorescence peut être reconstruite (étape F11).

De préférence, le procédé comporte la reconstruction des paramètres optiques, notamment l'atténuation, avant la répartition des fluorophores 4. En effet, le transport de la lumière dans un milieu diffusant est perturbé par la présence des bords de l'objet 1. La reconstruction de l'atténuation permet de mettre en évidence les bords de l'objet 1. La reconstruction de la répartition des fluorophores 4 est ainsi plus juste.

## Revendications

1. Procédé de reconstruction de la répartition de fluorophores dans un objet (1) inhomogène, ledit objet (1) comportant :

   - des fluorophores (4),
   - une première face (2) disposée en regard d'au moins une source de lumière (S) pour l'éclairement de ladite première face (2) avec une lumière d'excitation (λex) des fluorophores (4),

   le procédé comportant :

   - l'éclairement de la première face (2) de l'objet (1) avec la lumière d'excitation, et
   - la détection par l'intermédiaire d'une matrice de détecteurs, d'une lumière (λem, λex) émise par une seconde face (3) de l'objet (1),

   **caractérisé en ce que** ledit procédé comporte :

   - la mise en contact d'une première partie (D1) des détecteurs (D) avec l'objet (1), une seconde partie (D2) complémentaire des détecteurs (D) n'étant pas en contact avec l'objet (1), et la détermination de fonctions de Green, chacune associée à une première coordonnée spatiale (C1) et à une seconde coordonnée spatiale (C2), la seconde coordonnée spatiale désignant un détecteur (D1) en contact avec l'objet,

   ou

   - plusieurs sources de lumière (S) étant disposées en regard de la première face (1), la mise en contact d'une première partie (S1) des sources (S) avec l'objet (1), une seconde partie (S2) des sources (S) n'étant pas en contact avec l'objet (1), et la détermination de fonctions de Green, chacune associée à une première coordonnée spatiale (C1) et à une seconde coordonnée spatiale (C2), la première coordonnée spatiale (C1) désignant une source (S1) en contact avec l'objet.

2. Procédé selon la revendication 1, **caractérisé en ce que** les fonctions de Green sont établies en mettant à zéro les signaux détectés par la seconde partie des détecteurs (D2).

3. Procédé selon la revendication 1, **caractérisé en ce que** les fonctions de Green sont établies en mettant à zéro les signaux émis par la seconde partie des sources (S2).

4. Procédé selon la revendication 1, **caractérisé en ce que** le signal d'un détecteur non en contact avec l'objet (1) est utilisé pour calculer (F3) une intensité émise par la seconde face (3) de l'objet (1) lorsque la surface de l'objet (1) est connue, ledit calcul étant utilisé pour déterminer des fonctions de Green dont les secondes coordonnées spatiales (C2) correspondent à des points de la seconde face (3) de l'objet (1).

5. Procédé selon la revendication 1, **caractérisé en ce que** lorsqu'une zone de la surface de l'objet (1) n'est pas connue, le signal d'un détecteur correspondant non en contact avec l'objet (1) est mis à zéro.

6. Procédé selon la revendication 1, **caractérisé en ce que** le signal d'une source non en contact avec l'objet (1) est utilisé pour calculer (F3) un signal reçu par la première face (2) de l'objet (1) lorsque la surface de l'objet (1) est connue, ledit calcul étant utilisé pour déterminer des fonctions de Green dont les premières coordonnées spatiales (C1) correspondent à des points de la première face (2) de l'objet (1).

7.  Procédé selon la revendication 1, **caractérisé en ce que** lorsqu'une zone de la surface de l'objet (1) n'est pas connue, le signal d'une source correspondante non en contact avec l'objet (1) est mis à zéro.

8.  Procédé selon la revendication 1, **caractérisé en ce que** des intensité de lumière émises à la seconde face (3) de l'objet (1) sont déterminées par calcul (F3), après détermination expérimentale, au moins partielle, de la forme de la surface de l'objet (1), les fonctions de green correspondant aux intensités de lumière émises à la seconde face (3) de l'objet (1).

9.  Procédé selon la revendication 1, **caractérisé en ce que** des intensité de lumière reçues par la première face (2) de l'objet (1) sont déterminées par calcul (F3), après détermination expérimentale, au moins partielle, de la forme de la surface de l'objet (1), les fonctions de green correspondant aux intensités de lumière reçues par la première face (2) de l'objet (1).

10. Procédé selon la revendication 1, **caractérisé en ce qu'**il comporte la reconstruction des paramètres optiques de l'objet avant la reconstruction de la répartition des fluorophores (4).

11. Procédé selon la revendication 10, **caractérisé en ce que** la répartition des paramètres optiques comprend la reconstruction de l'atténuation.

**Patentansprüche**

1.  Verfahren zur Wiederherstellung der Verteilung von Fluorophoren in einem inhomogenen Objekt (1), wobei das Objekt (1) umfasst:

    - Fluorophore (4),
    - eine erste Seite (2), die gegenüber wenigstens einer Lichtquelle (S) zur Beleuchtung der ersten Seite (2) mit einem Licht zur Anregung ($\lambda$ex) der Fluorophore (4) angeordnet ist,

    wobei das Verfahren umfasst:

    - die Beleuchtung der ersten Seite (2) des Objektes (1) mit dem Anregungslicht und
    - die Erfassung eines durch eine zweite Seite (3) des Objektes (1) emittierten Lichts ($\lambda$em, $\lambda$ex) mittels einer Detektormatrix,

    **dadurch gekennzeichnet, dass** das Verfahren umfasst:

    - das Inkontaktbringen eines ersten Teils (D1) der Detektoren (D) mit dem Objekt (1), wobei ein ergänzender zweiter Teil (D2) der Detektoren (D) nicht mit dem Objekt (1) in Kontakt ist, und die Bestimmung von Green'schen Funktionen, wobei eine jede einer ersten Raumkoordinate (C1) und einer zweiten Raumkoordinate (C2) zugeordnet ist, wobei die zweite Raumkoordinate einen mit dem Objekt in Kontakt befindlichen Detektor (D1) bezeichnet,

    oder,

    - wenn mehrere Lichtquellen (S) gegenüber der ersten Seite (1) angeordnet sind, das Inkontaktbringen eines ersten Teils (S1) der Quellen (S) mit dem Objekt (1), wobei ein zweiter Teil (S2) der Quellen (S) nicht mit dem Objekt (1) in Kontakt ist, und die Bestimmung von Green'schen Funktionen, wobei eine jede einer ersten Raumkoordinate (C1) und einer zweiten Raumkoordinate (C2) zugeordnet ist, wobei die erste Raumkoordinate (C1) eine mit dem Objekt in Kontakt befindliche Quelle (S1) bezeichnet.

2.  Verfahren nach Anspruch 1, **dadurch gekennzeichnet, dass** die Green'schen Funktionen durch Nullstellung der durch den zweiten Teil der Detektoren (D2) erfassten Signale erstellt werden.

3.  Verfahren nach Anspruch 1, **dadurch gekennzeichnet, dass** die Green'schen Funktionen durch Nullstellung der durch den zweiten Teil der Quellen (S2) ausgesandten Signale erstellt werden.

4.  Verfahren nach Anspruch 1, **dadurch gekennzeichnet, dass** das Signal eines nicht mit dem Objekt (1) in Kontakt befindlichen Detektors verwendet wird, um eine durch die zweite Seite (3) des Objektes (1) ausgesandte Stärke zu berechnen (F3), wenn die Oberfläche des Objektes (1) bekannt ist, wobei die Berechnung verwendet wird, um Green'sche Funktionen zu bestimmen, deren zweite Raumkoordinaten (C2) Stellen der zweiten Seite (3) des Objektes (1) entsprechen.

5.  Verfahren nach Anspruch 1, **dadurch gekennzeichnet, dass**, wenn ein Bereich der Oberfläche des Objektes (1) nicht bekannt ist, das Signal eines entsprechenden Detektors, der nicht mit dem Objekt (1) in Kontakt ist, auf null gesetzt wird.

6.  Verfahren nach Anspruch 1, **dadurch gekennzeichnet, dass** das Signal einer nicht mit dem Objekt (1) in Kontakt befindlichen Quelle verwendet wird, um ein durch die erste Seite (2) des Objektes (1) empfangenes Signal zu berechnen (F3), wenn die Oberfläche des Objektes (1) bekannt ist, wobei die Berechnung verwendet wird, um Green'sche Funktionen zu bestimmen, deren erste Raumkoordinaten (C1) Stellen der ersten Seite (2) des Objektes (1) entsprechen.

7.  Verfahren nach Anspruch 1, **dadurch gekennzeichnet, dass**, wenn ein Bereich der Oberfläche des Objektes (1) nicht bekannt ist, das Signal einer entsprechenden Quelle, die nicht mit dem Objekt (1) in Kontakt ist, auf null gesetzt wird.

8.  Verfahren nach Anspruch 1, **dadurch gekennzeichnet, dass** an der zweiten Seite (3) des Objektes (1) emittierte Lichtstärken nach wenigstens teilweiser experimenteller Bestimmung durch Berechnung (F3) der Form der Oberfläche des Objektes (1) bestimmt werden, wobei die Green'schen Funktionen den an der zweiten Seite (3) des Objektes (1) emittierten Lichtstärken entsprechen.

9.  Verfahren nach Anspruch 1, **dadurch gekennzeichnet, dass** durch die erste Seite (2) des Objektes (1) empfangene Lichtstärken nach wenigstens teilweiser experimenteller Bestimmung durch Berechnung (F3) der Form der Oberfläche des Objektes (1) bestimmt werden, wobei die Green'schen Funktionen den durch die erste Seite (2) des Objektes (1) empfangenen Lichtstärken entsprechen.

10. Verfahren nach Anspruch 1, **dadurch gekennzeichnet, dass** es die Wiederherstellung der optischen Parameter des Objektes vor der Wiederherstellung der Verteilung der Fluorophore (4) umfasst.

11. Verfahren nach Anspruch 10, **dadurch gekennzeichnet, dass** die Verteilung der optischen Parameter die Wiederherstellung der Dämpfung umfasst.

**Claims**

1.  Method for reconstruction of the distribution of fluorophores in an inhomogeneous object (1), said object (1) comprising:

    - fluorophores (4),
    - a first surface (2) arranged facing at least one light source (S) for illumination of said first surface (2) with an excitation light ($\lambda$ex) of the fluorophores (4),

    the method comprising:

    - illumination of the first surface (2) of the object (1) with the excitation light, and
    - detection, by means of a matrix of detectors, of a light ($\lambda$em, $\lambda$ex) emitted by a second surface (3) of the object (1),

    **characterized in that** said method comprises:

    - placing a first part (D1) of the detectors (D) in contact with the object (1), a complementary second part (D2) of the detectors (D) not being in contact with the object (1), and determination of the Green functions, each associated with a first spatial coordinate (C1) and a second spatial coordinate (C2), the second spatial coordinate designating a detector (D1) in contact with the object,

or

- several light sources (S) being arranged facing the first surface (1), placing a first part (S1) of the sources (S) in contact with the object (1), a second part (S2) of the sources (S) not being in contact with the object (1), and determination of the Green functions, each associated with a first spatial coordinate (C1) and a second spatial coordinate (C2), the first spatial coordinate (C1) designating a source (S1) in contact with the object.

2. Method according to claim 1, **characterized in that** the Green functions are established by a zero reset of the signals detected by the second part of the detectors (D2).

3. Method according to claim 1, **characterized in that** the Green functions are established by a zero reset of the signals emitted by the second part of the sources (S2).

4. Method according to claim 1, **characterized in that** the signal from a detector not in contact with the object (1) is used to calculate (F3) an intensity emitted by the second surface (3) of the object (1) when the surface of the object (1) is known, said calculation being used to determine Green functions, the second spatial coordinates (C2) of which correspond to points of the second surface (3) of the object (1).

5. Method according to claim 1, **characterized in that**, when an area of the surface of the object (1) is not known, the signal from a corresponding detector not in contact with the object (1) is zero reset.

6. Method according to claim 1, **characterized in that** the signal from a source not in contact with the object (1) is used to calculate (F3) a signal received by the first surface (2) of the object (1) when the surface of the object (1) is known, said calculation being used to determine Green functions, the first spatial coordinates (C1) of which correspond to points of the first surface (2) of the object (1).

7. Method according to claim 1, **characterized in that**, when an area of the surface of the object (1) is not known, the signal from a corresponding source not in contact with the object (1) is zero reset.

8. Method according to claim 1, **characterized in that** light intensities emitted on the second surface (3) of the object (1) are determined by calculation (F3), after at least partial experimental determination, of the shape of the surface of the object (1), the Green functions corresponding to the light intensities emitted on the second surface (3) of the object (1).

9. Method according to claim 1, **characterized in that** light intensities received by the first surface (2) of the object (1) are determined by calculation (F3), after at least partial experimental determination, of the shape of the surface of the object (1), the Green functions corresponding to the light intensities received by the first surface (2) of the object (1).

10. Method according to claim 1, **characterized in that** it comprises reconstruction of the optic parameters of the object before reconstruction of the distribution of the fluorophores (4).

11. Method according to claim 10, **characterized in that** the distribution of the optic parameters comprises reconstruction of the attenuation.

Figure 1 (art antérieur)

Figure 2

Figure 3

Figure 4

Détermination
des Fonctions
analytiques — F7

↓

Détermination de fonctions de
Green pertinentes — F8

↓

Détermination de l'ensemble des
fonctions de Green — F9

↓

Adaptation des fonctions de
Green à l'inhomogénéité — F10

↓

Reconstruction de la
fluorescence — F11

Figure 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **A. JOSHI et al.** Adaptive finite element based tomography for fluorescence optical imaging in tissue. *Optics Express 5402,* 01 Novembre 2004, vol. 12 (22
- **DE R.B. SCHULZ et al.** Expérimental Fluorescence Tomography of Tissues With Noncontact Measurements. *IEEE Transactions on Medical Imaging,* Avril 2004, vol. 23 (4
- **E. SCHERLEITNER et al.** Optical Tomography Imaging Based on Higher Order Born Approximation of Diffuse Photon Density Waves. *IEEE Transactions on Instrumentation and Measurement,* Août 2005, vol. 54 (4
- **J. RIPOLL et al.** Free-Space Propagation of Diffusive Light : Theory and Experiments. *Physical Review Letters,* 2003, vol. 91 (10